# FASCICULE DE BREVET EUROPEEN

(11) **EP 4 149 743 B1**
(45) Date de publication et mention de la délivrance du brevet: **25.06.2025**
(21) Numéro de dépôt: 21731242.0
(22) Date de dépôt: 11.05.2021
(51) Int. Cl.: B22F 10/28, B22F 10/36, B22F 10/366, B22F 12/49, B29C 64/153, B33Y 10/00, B33Y 30/00, B33Y 50/02

(54) **PROCÉDÉ ET DISPOSITIF DE FABRICATION ADDITIVE D'UN OBJET À PARTIR D'UNE COUCHE DE POUDRE**
VERFAHREN UND VORRICHTUNG ZUR ADDITIVEN HERSTELLUNG EINES BAUTEILS AUS EINER PULVERSCHICHT
PROCESS AND APPARATUS FOR ADDITIVE MANUFACTURING AN OBJECT FROM A POWDER LAYER

(30) Priorité: 12.05.2020 FR 2004676
(43) Date de publication de la demande: 22.03.2023
(73) Titulaire: AddUp, 63118 Cébazat (FR)
(72) Inventeur: DENAVIT, Franck, 63118 Cébazat (FR); BLANCHET, Etienne, 63118 Cébazat (FR); DELORME, Camille, 63118 Cébazat (FR)
(74) Mandataire: Novagraaf Group
(86) Numéro de dépôt international: PCT/FR2021/050806
(87) Numéro de publication internationale: WO 2021/229171

(56) Documents cités:
- EP-A1- 2 893 994
- WO-A1-2019/207239
- DE-A1- 102015 212 284
- KR-A- 20200 027 583

## Description

### DOMAINE DE L'INVENTION

La présente invention concerne un procédé de fabrication additive d'un objet à partir d'une couche de poudre, ainsi qu'un dispositif adapté pour mettre en œuvre un tel procédé.

### ETAT DE LA TECHNIQUE

La fabrication additive consiste à réaliser un objet par fusion de couches de poudre superposées les unes sur les autres. Ces couches correspondent à différentes sections de l'objet à fabriquer.

Pour fusionner une couche de poudre, une source projette un faisceau d'énergie sur la surface de cette couche de poudre, en une tache où se produit une telle fusion. Le faisceau d'énergie est ensuite contrôlé de sorte à balayer la surface afin de propager cette fusion sur toute la surface de la couche.

Conventionnellement, le faisceau d'énergie balaye différentes zones de la surface dans une direction longitudinale et selon un sens aller et selon un sens retour, en alternance.

Il a notamment été proposé de piloter la source d'énergie afin que la tache ne parcoure pas chaque zone selon un mouvement de translation parfaitement rectiligne dans la direction longitudinale, mais selon un mouvement composé d'une translation dans la direction longitudinale et d'un mouvement oscillatoire (« wobbling » en anglais). Le mouvement oscillatoire oscille notamment dans une direction transversale, de manière à élargir le bain de fusion.

Différents mouvements oscillatoires ont été proposés.

L'un d'entre eux, que l'on appelle généralement « mode circulaire », est tel que la tache suit une trajectoire comprenant des boucles décalées les unes par rapport aux autres dans la direction longitudinale. Un tel mode circulaire notamment été proposé dans le document WO2019207239.

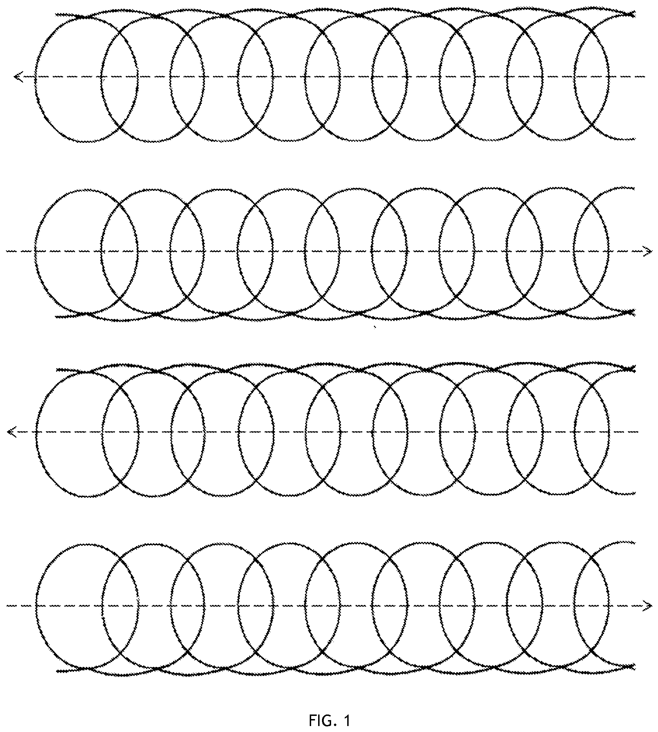

La **figure 1** montre une trajectoire suivie par la tache au cours de la mise en œuvre d'un procédé utilisant un tel mode circulaire. Sur la figure 1, la direction longitudinale est horizontale, et la direction transversale est verticale. Le sens aller va de la gauche vers la droite et le sens retour va de la droite vers la gauche. Quatre successions de boucles, se trouvant en quatre zones distinctes sont représentées sur la figure 1. Deux des quatre zones ont été parcourues dans le sens aller, et les deux autres dans le sens retour, comme le montrent les quatre flèches en pointillé. La tache parcourt chaque boucle dans un sens de rotation constant. Le sens de rotation est le même pour chacune des quatre zones, et en particulier pour chaque boucle. En conséquence, deux successions de boucles adjacentes sont tête-bêche.

### EXPOSE DE L'INVENTION

Un but de l'invention est de répartir de manière plus homogène l'énergie fournie par un faisceau d'énergie sur une couche de poudre au cours d'une fabrication additive, sans pour autant réduire la durée de fabrication.

Il est à cet effet proposé, selon un premier aspect, un procédé de fabrication additive d'un objet à partir d'une couche de poudre, comprenant des étapes de:
- projection d'un faisceau d'énergie sur une surface de la couche de poudre en une tache de sorte à fusionner la poudre,
- balayage, par le faisceau d'énergie, d'une première zone de la surface dans une direction longitudinale de balayage et selon un sens aller, et, au cours du balayage de la première zone, orientation du faisceau d'énergie de sorte que la tache parcourt la première zone selon une trajectoire comprenant des premières boucles décalées les unes par rapport aux autres dans la direction longitudinale de balayage, la tache parcourant chaque première boucle dans un premier sens de rotation,
- balayage par le faisceau d'énergie d'une deuxième zone de la surface dans la direction longitudinale de balayage et selon un sens retour opposé au sens aller, la deuxième zone étant adjacente à la première zone dans une direction transversale de balayage perpendiculaire à la direction longitudinale de balayage, et au cours du balayage de la deuxième zone, orientation du faisceau d'énergie de sorte que la tache parcourt la deuxième zone selon une trajectoire comprenant des deuxièmes boucles décalées les unes par rapport aux autres dans la direction longitudinale de balayage, la tache parcourant chaque deuxième boucle dans un deuxième sens de rotation opposé au premier sens de rotation.

Les inventeurs ont remarqué que, du fait de la forme asymétrique des boucles parcourues par la tache, davantage d'énergie était déposée à la base des boucles qu'à leur sommet. En conséquence, lorsque deux successions de boucles adjacentes sont tête-bêche comme représentées en figure 1, l'énergie déposée sur la couche varie fortement dans la direction transversale : cette énergie est élevée à proximité de bases des boucles en regard, et plus faible à proximité de sommets de boucles en regard.

Changer de sens de parcours des boucles entre la première zone et la deuxième zone permet de faire en sorte que la succession de premières boucles et la succession de deuxièmes boucles ne sont plus tête-bêche, comme sur la figure 1, mais sont orientées dans le même sens dans la direction transversale. Ainsi, les bases des premières boucles sont à proximité des sommets des deuxièmes boucles, ou alors les sommets des premières boucles sont à proximité des bases des deuxièmes boucles, ce qui permet dans les deux cas de réduire les variations d'énergie dans la direction transversale. C'est pourquoi le dépôt d'énergie est plus homogène.

Par ailleurs, le fait de balayer la première zone dans un sens aller et la deuxième zone dans un sens retour permet de balayer l'ensemble de ces deux zones de manière rapide. C'est pourquoi le gain d'homogénéité offert par le procédé selon le premier aspect ne compromet pas sa vitesse d'exécution.

Le procédé selon le premier aspect peut en outre comprendre les caractéristiques optionnelles suivantes, prises seules ou combinées entre elles lorsque cela est techniquement possible.

De préférence, au moins deux des premières boucles et/ou au moins deux des deuxièmes boucles s'entrecroisent.

De préférence, au moins deux des premières boucles et/ou au moins deux des deuxièmes boucles sont de même dimension.

De préférence, la succession de deuxièmes boucles est à distance de la succession de premières boucles dans la direction transversale de balayage.

De préférence, au moins une des boucles s'étend sur une amplitude mesurée dans la direction transversale de balayage comprise entre 100 micromètres et 2 millimètres.

De préférence, le faisceau d'énergie oscille dans la direction transversale de balayage a une fréquence d'au moins 1 kHz.

De préférence, le faisceau d'énergie est un faisceau laser ou un faisceau d'électrons.

Il est également proposé, selon un deuxième aspect, un dispositif de fabrication additive d'un objet à partir d'une couche de poudre, le dispositif comprenant une source d'énergie configurée pour :
- projeter un faisceau d'énergie sur une surface de la couche de poudre en une tache de sorte à fusionner la poudre,
- commander un balayage, par le faisceau d'énergie, d'une première zone de la surface dans une direction longitudinale de balayage et selon un sens aller, et, au cours du balayage de la première zone, orienter le faisceau d'énergie de sorte que la tache parcourt la première zone selon une trajectoire comprenant des premières boucles décalées les unes par rapport aux autres dans la direction longitudinale de balayage, la tache parcourant chaque première boucle dans un premier sens de rotation,
- commander un balayage par le faisceau d'énergie d'une deuxième zone de la surface dans la direction longitudinale de balayage et selon un sens retour opposé au sens aller, la deuxième zone étant adjacente à la première zone dans une direction transversale de balayage perpendiculaire à la direction longitudinale de balayage, et, au cours du balayage de la deuxième zone, orienter le faisceau d'énergie de sorte que la tache parcourt la deuxième zone selon une trajectoire comprenant des deuxièmes boucles décalées les unes par rapport aux autres dans la direction longitudinale de balayage, le faisceau d'énergie parcourant chaque deuxième boucle dans un deuxième sens de rotation opposé au premier sens de rotation.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1, déjà discutée, représente une trajectoire suivie par une tache résultant de la projection d'un faisceau d'énergie sur une surface à l'aide d'un procédé connu de l'état de la technique.
La figure 2 est une vue schématique d'un dispositif de fabrication additive selon un premier mode de réalisation.
La figure 3 est une vue en perspective du dispositif de fabrication additive déjà représenté en figure 2.
La figure 4 est une vue en perspective d'un dispositif de fabrication additive selon un deuxième mode de réalisation.
La figure 5 est un organigramme d'étapes d'un procédé de fabrication additive selon un mode de réalisation.
La figure 6 représente une trajectoire suivie par une tache résultant de la projection d'un faisceau d'énergie sur une surface au cours de la mise en œuvre du procédé auquel se rapporte la figure 4.

Sur l'ensemble des figures, les éléments similaires portent des références identiques.

### DESCRIPTION DETAILLEE DE L'INVENTION

### Dispositif de fabrication additive

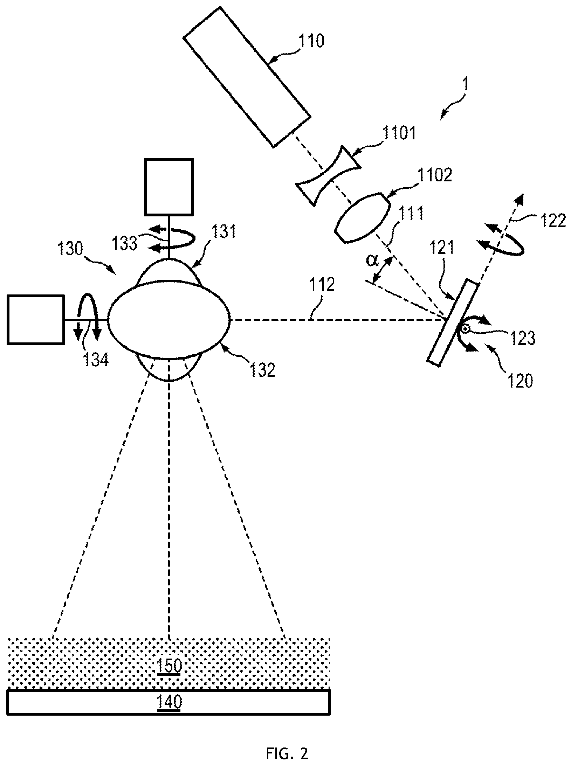

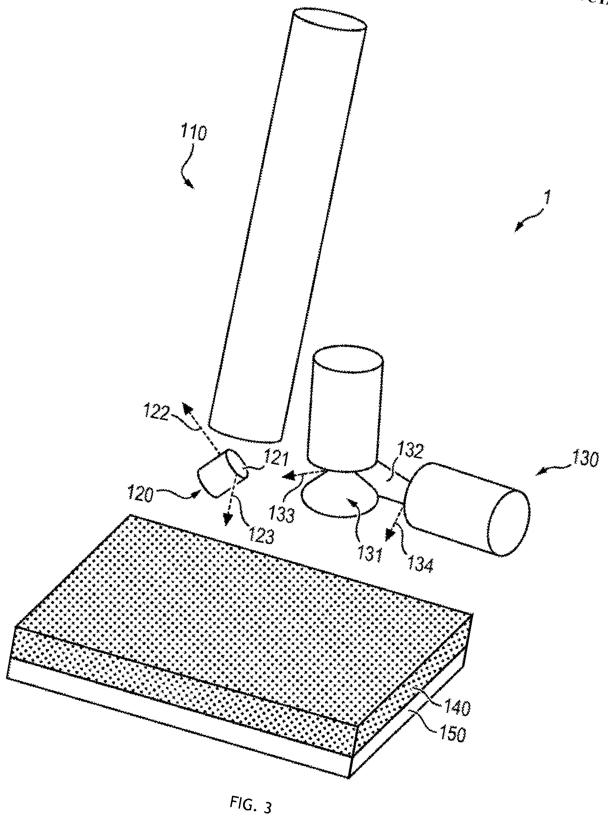

En référence aux **figures 2** **et** **3****,** un dispositif de fabrication additive comprend une source d'énergie 1 selon un premier mode de réalisation, et un support 140.

Le support 140 présente une surface libre, typiquement plane, s'étendant dans deux directions : une direction longitudinale et une direction transversale perpendiculaire à la direction longitudinale. Dans la suite, on note par convention X la direction longitudinale, et Y la direction transversale.

La surface libre du support 140 a vocation à servir de surface de support 140 pour une couche 150 de poudre ou une pluralité de couche 150s empilées les unes sur les autres.

De manière générale, la source d'énergie 1 est adaptée pour projeter un faisceau d'énergie vers le support 140. Lorsqu'une couche 150 de poudre est déposée sur le support 140, ce faisceau d'énergie se projette sur une surface supérieure de cette couche 150 en une tache.

La source d'énergie 1 comprend notamment un générateur 110 configuré pour générer le faisceau d'énergie. Le générateur 110 est par exemple une source laser ; le faisceau généré est alors un faisceau laser comprenant des photons, autrement dit un faisceau lumineux. En variante, le générateur 110 est de type EBM (« Electron Beam Melting »), c'est-à-dire d'un type adapté pour générer un faisceau d'électrons. Dans la suite, on se placera dans le cas non limitatif d'un faisceau laser.

La source d'énergie 1 comprend en outre un focalisateur adapté pour ajuster une focalisation du faisceau lumineux. Ce focalisateur permet de faire ainsi varier la taille de la tache en laquelle le faisceau se projette sur la surface supérieure d'une couche 150 de poudre déposée sur le support 140.

Le focalisateur comprend par exemple un élément de focalisation 1102 et une lentille focalisatrice 1101 mobile par rapport à l'élément de focalisation en translation parallèlement à un axe optique de la lentille. La lentille focalisatrice 1101 est agencée en aval du générateur 110 de faisceau. Dans ce qui suit, les termes « amont » et « aval » se rapporteront implicitement à un sens de propagation du faisceau d'énergie sur un chemin optique allant du générateur 110 au support 140.

Le focalisateur comprend un actionneur pour déplacer la lentille focalisatrice 1101 par rapport à l'élément de focalisation 1102.

La source d'énergie 1 comprend par ailleurs un dispositif de balayage 130 adapté pour orienter le faisceau d'énergie afin que la tache où se projette ce faisceau soit mobile par rapport au support 140, sur la surface de la couche 150, dans la direction longitudinale et dans la direction transversale.

Le dispositif de balayage 130 est agencé en aval du dispositif de focalisation.

Le dispositif de balayage 130 comprend par exemple un premier miroir de balayage 131 mobile en rotation par rapport au support 140 autour d'un premier axe de rotation 133, et un deuxième miroir de balayage 132 mobile en rotation par rapport au support 140 autour d'un deuxième axe de rotation 134 différent du premier axe de rotation. Par exemple, le premier axe de rotation 133 est dans la direction longitudinale, et le deuxième axe de rotation 134 est dans la direction transversale. L'un des deux miroirs de balayage 131, 132 est agencé en aval de l'autre miroir de balayage, de tel sorte qu'un faisceau d'énergie en provenance du générateur 110 se réfléchisse sur les deux miroirs de balayage séquentiellement, avant d'être redirigé vers le support 140.

En variante, le dispositif de balayage 130 comprend un unique miroir de balayage mobile en rotation par rapport au support 140, autour du premier axe de rotation 133 et autour du deuxième axe de rotation 134. Dans ce cas, cet unique miroir de balayage est agencé pour qu'un faisceau d'énergie en provenance du générateur 110 se réfléchisse sur ce miroir de balayage avant d'être redirigé vers le support 140.

Le dispositif de balayage 130 comprend par ailleurs au moins un actionneur (un par miroir de balayage utilisé). Chaque actionneur a pour fonction de déplacer un miroir de balayage en rotation sur une plage d'angles de balayage.

Les plages d'angle de balayages sont par exemple adaptées pour permettre à la tache de couvrir toute la surface de la couche 150, tout du moins une majorité de celle-ci.

Pour une configuration donnée du dispositif de balayage, l'axe central d'un faisceau émanant du générateur 110 coupe la surface du support 140 en un point spécifique. Il existe ainsi une relation mathématique entre les coordonnées (x, y) de ce point et la position angulaire des miroirs de balayage 131, 132.

Le dispositif de balayage 130 est en particulier configuré pour susciter une translation de la tache projetée sur la surface de la couche 150 de poudre dans une direction longitudinale de balayage, dans un sens aller et dans un sens retour opposé au sens aller, et ce en alternance, la direction longitudinale de balayage étant choisie indépendamment des directions longitudinale et transversale du support 140.

Dans le premier mode de réalisation, la source d'énergie 1 comprend par ailleurs un dispositif d'oscillation 120, adapté pour faire osciller un faisceau d'énergie émanant du générateur 110, et par conséquent faire osciller également la tache où se projette de faisceau d'énergie dans au moins une direction d'oscillation, sur la surface d'une couche 150 de poudre déposée sur le support 140.

Le dispositif d'oscillation 120 comprend par exemple un miroir d'oscillation mobile en rotation par rapport au support 140 autour de deux axes d'oscillation différents 122, 123. Le dispositif d'oscillation 120 comprend par ailleurs un actionneur agencé pour faire osciller le miroir d'oscillation à une fréquence donnée, fixe ou variable.

L'actionneur du dispositif d'oscillation 120 est configuré pour faire osciller le miroir d'oscillation autour des axes d'oscillation 122, 123 sur deux plages d'angle d'oscillation plus réduite que les plages d'angle de balayage sur laquelle chaque miroir de balayage 131, 132 est mobile en rotation autour des axes 133, 134. Les plages d'angle d'oscillation utilisées par le dispositif d'oscillation 120 est adaptée pour permettre à la tache projetée d'osciller sur une amplitude comprise entre 100 micromètres et 2 millimètres.

Le dispositif de balayage 130 et le dispositif d'oscillation 120 sont configurés pour coopérer de sorte que la tache puisse se déplacer sur la surface de la couche 150 de poudre déposée sur le support 140 selon un mouvement composé d'une translation induite par le dispositif de balayage 130 et d'un mouvement oscillatoire induit par le dispositif d'oscillation 120. Dit autrement, le mouvement oscillatoire module la translation induite par le dispositif de balayage 130.

Le dispositif d'oscillation 120 est agencé en amont du dispositif de balayage 130. En d'autres termes, un faisceau d'énergie en provenance du générateur 110 se réfléchit sur le miroir d'oscillation avant d'atteindre le dispositif de balayage 130.

Le dispositif d'oscillation 120 est par exemple agencé en aval du focalisateur.

La source laser 110, le dispositif de modulation 120 et le dispositif de balayage 130 sont par exemple agencés de sorte à permettre un débit de fusion surfacique, c'est-à-dire la surface de la couche 150 de poudre couverte par le spot laser par unité de temps, supérieur à 1000 cm²/min, par exemple supérieur à 2000 cm²/min, par exemple supérieur à 4000 cm²/min, par exemple inférieur à 15000 cm²/min, par exemple inférieur à 10000 cm²/min, par exemple de l'ordre de 6000 cm²/min.

Le dispositif de modulation 120 et le dispositif de balayage 130 sont par exemple configuré pour permettre une vitesse de déplacement de la tache comprise entre 0,5 et 10 m/s, par exemple entre 1 et 5 m/s, par exemple égale à 1 ou 2 m/s.

La source d'énergie 1 comprend par ailleurs une unité de commande configurée pour commander le focalisateur, le dispositif de balayage 130 et le dispositif d'oscillation 120 (non-illustrée). Cette unité de commande est en particulier configurée pour commander les actionneurs respectifs de ces différents dispositifs.

L'unité de commande peut comprendre ou être couplée à une mémoire mémorisant une table de valeurs de paramètres de focalisation précalculées pour différents couples de coordonnées (x, y) dans le plan de la surface libre du support 140. Ainsi, lorsque la tache est centrée en un point de coordonnées (x, y) de la surface du support, l'unité de commande est configurée pour commander le focalisateur à l'aide de la valeur de paramètre de focalisation associée à ce couple dans la table de valeurs précalculées.

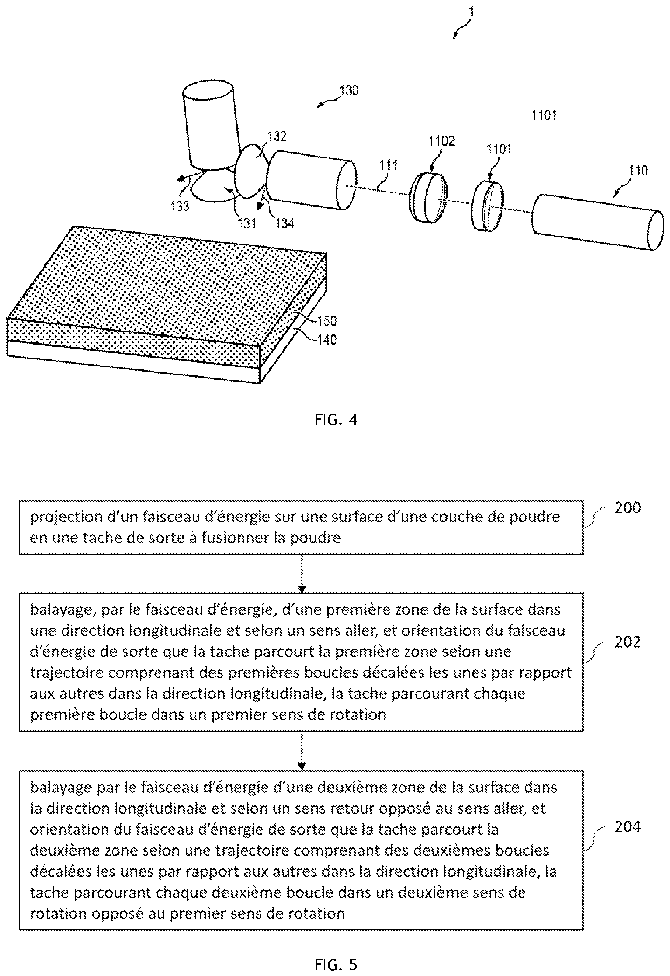

Est représenté en **figure 4** un deuxième mode de réalisation de la source d'énergie 1. Ce deuxième mode de réalisation diffère du premier mode de réalisation en ce qu'il ne comprend pas de dispositif d'oscillation 120. En revanche, dans le deuxième mode de réalisation, le dispositif 130 est configuré pour, à lui seul, faire en sorte que la tache puisse se déplacer sur la surface de la couche 150 de poudre déposée sur le support 140 selon un mouvement composé d'une translation induite par le dispositif de balayage 130 et d'un mouvement oscillatoire qui serait induit par le dispositif d'oscillation 120 s'il était présent dans ce second mode de réalisation. Ceci est possible en faisant osciller le ou les miroirs de balayage.

### Procédé de fabrication additive

En référence à la **figure 4****,** un procédé de fabrication additive utilisant le dispositif décrit ci-avant comprend les étapes suivantes.

Au moins une couche 150 de poudre est déposée sur le support 140, comme représenté en figure 1. La couche 150 de poudre présente une surface libre s'étendant dans deux directions longitudinale et transversale du support 140.

Les grains de poudre ont par exemple une granulométrie comprise entre 10 et 100 µm, par exemple entre 20 et 60 µm, par exemple égale à 40 µm.

Le matériau de la ou chaque couche 150 de poudre a par exemple une fluence comprise entre 0,5 et 10 J/mm², par exemple comprise entre 1 et 5 J/mm², par exemple égale à 2 J/mm².

Le matériau de la ou chaque couche 150 de poudre peut comprendre du titane et/ou de l'aluminium et/ou de l'inconel et ou de l'acier inoxydable et/ou de l'acier maraging. Le matériau de la ou chaque couche 150 de poudre peut être constitué de titane et/ou d'aluminium et/ou d'inconel et ou d'acier inoxydable et/ou d'acier maraging.

Le générateur 110 est activé, de manière à émettre un faisceau d'énergie. Ce faisceau d'énergie traverse le focalisateur, le dispositif d'oscillation 120 (si présent dans la source d'énergie 1), et le dispositif de balayage 130 avant de se projeter sur la surface libre de la couche 150 de poudre en une tache (étape 200). La couche 150 de poudre chauffe alors au niveau de cette tache, au point de susciter une fusion de ses grains.

Le focalisateur ajuste par ailleurs la focalisation du faisceau de manière à réduire la dimension de cette tache, et donc de concentrer davantage l'énergie véhiculée par le faisceau d'énergie.

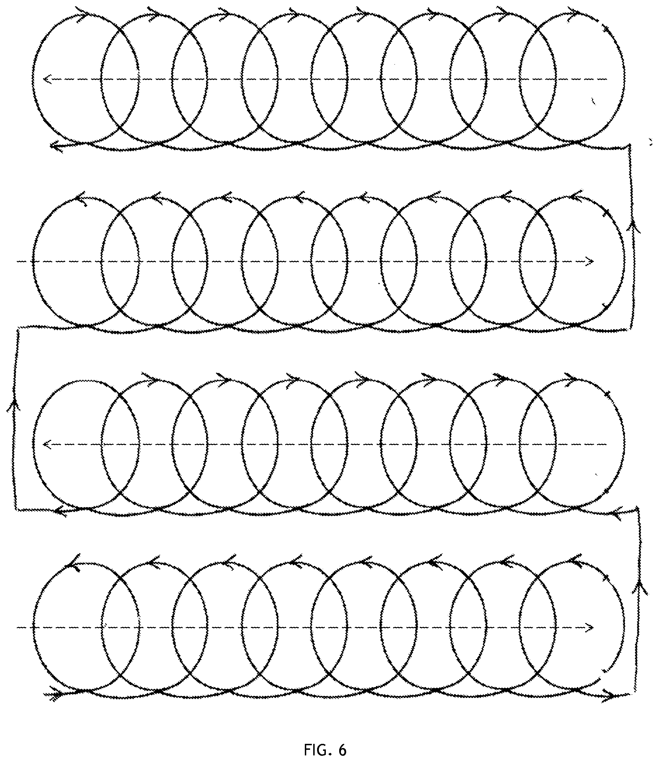

Le dispositif de balayage 130 oriente le faisceau de sorte que la tache se déplace en translation dans une direction longitudinale de balayage, selon un sens aller, sur une première zone de la surface. Ce mouvement de translation est représenté sur la figure 6 par des flèches en pointillé (étape 202).

Au cours de l'étape 202, le dispositif de balayage 130 ou le dispositif d'oscillation 120 fait osciller le faisceau, si bien que cette translation est modulée par un mouvement oscillatoire. Ce mouvement oscillatoire comprend une composante d'oscillation transversale dans une direction transversale de balayage perpendiculaire à la direction longitudinale de balayage et une composante d'oscillation longitudinale dans la direction longitudinale de balayage. En d'autres termes, ce mouvement oscillatoire engendre une oscillation de la tache sur la surface de la couche 150 de poudre non seulement dans la direction transversale de balayage, mais également dans la direction longitudinale de balayage.

Lorsque la source 1 est conforme au premier mode de réalisation, le mouvement oscillatoire est induit par le dispositif d'oscillation 120. Lorsque la source 1 est conforme au deuxième mode de réalisation, le mouvement oscillatoire est induit par le dispositif de balayage 130.

De préférence, les deux composantes d'oscillation oscillent à la même fréquence. Le mouvement oscillatoire peut alors être ellipsoïdal si les deux composantes sont de forme sinusoïdale.

En raison de la composition de ce mouvement oscillatoire et de la translation dans le sens aller, la tache suit, dans la première zone, une trajectoire comprenant une succession de premières boucles décalées les unes des autres dans la direction longitudinale de balayage.

Chaque boucle présente un nœud, qui est un point par lequel la tache passe deux fois. Chaque boucle comprend par ailleurs une portion amont, une portion intermédiaire en épingle à cheveu et une portion aval. La tache parcourt les différentes portions d'une boucle dans cet ordre : la portion amont, le nœud, la partie intermédiaire en épingle à cheveu, à nouveau le nœud, et enfin la partie aval. Cette partie aval est reliée à la partie amont d'une boucle suivante. En parcourant une boucle, la tache tourne autour d'un point central de la boucle toujours dans un même sens de rotation, dit premier sens de rotation.

Chaque boucle comprend une base formée par sa portion amont, sa portion aval et le nœud. Chaque boucle comprend un sommet formé par sa portion intermédiaire. En raison de sa forme asymétrique, la quantité d'énergie déposée par le faisceau à la base d'une boucle, (notamment à proximité du nœud) est plus élevée que la quantité d'énergie déposée au sommet de cette boucle.

Sur la figure 5, la direction longitudinale de balayage est horizontale, et le sens aller va de la gauche vers la droite, et le premier sens de rotation est un sens de rotation antihoraire. Il en découle que les bases respectives des premières boucles sont en dessous des sommets de ces premières boucles.

Si les deux composantes du mouvement oscillatoire ont la même amplitude, le mouvement oscillatoire devient circulaire. En conséquence, chaque première boucle présente une forme qui tend davantage vers un cercle.

De préférence, au moins une première boucle s'étend sur une hauteur, mesurée dans la direction transversale de balayage, comprise entre 100 micromètres et 2 millimètres. Cette hauteur correspond à l'amplitude de la composante transversale du mouvement oscillatoire.

Par ailleurs, il est préférable que le dispositif de balayage 130 (dans le deuxième mode de réalisation de la source d'énergie 1) ou le dispositif d'oscillation 120 (dans le premier mode de réalisation de la source d'énergie 1) fasse osciller la tache dans la direction transversale a une fréquence d'au moins 1 kHz. Cette fréquence est typiquement comprise entre 1 kHz et 10 kHz lorsque le faisceau d'énergie est un faisceau laser, ou comprise entre 1 kHz et 100 kHz lorsque le faisceau d'énergie est un faisceau d'électrons.

Toutes les premières boucles sont parcourues par la tache dans le premier sens de rotation.

Toutes les premières boucles sont de préférence de même dimension (de même hauteur entre leur base et leur sommet, mesurée dans la direction transversale, et/ou de même largeur, mesurée dans la direction longitudinale).

Au moins deux des premières boucles s'entrecroisent, c'est à dire qu'une première boucle courante traverse une boucle précédente en au moins deux points d'intersection. De préférence, toutes les premières boucles s'entrecroisent deux à deux.

La succession de premières boucles s'étend sur une certaine longueur dans la direction longitudinale de balayage, et sur une certaine largeur dans la direction transversale de balayage.

Ensuite, le dispositif de balayage 130 oriente le faisceau d'énergie de sorte à déplacer la tache dans la direction transversale de balayage, par exemple en translation, de sorte que la tache atteigne une deuxième zone qui soit adjacente à la première zone (par exemple au-dessus de la première zone dans le cas illustré sur la figure 5).

Ensuite, le dispositif de balayage 130 oriente le faisceau de sorte que la tache se déplace sur la deuxième zone en translation dans la direction longitudinale de balayage, mais cette fois selon un sens retour opposé au sens aller (étape 204).

Au cours de l'étape 204, le dispositif de balayage 130 ou le dispositif d'oscillation 120 fait osciller le faisceau, si bien que cette translation est modulée par un mouvement oscillatoire, de telle sorte que la tache suit, dans la deuxième zone, une trajectoire comprenant une succession de deuxièmes boucles décalées les unes des autres dans la direction longitudinale de balayage. Toutes les premières boucles sont cette fois parcourues par la tache selon un deuxième sens de rotation.

Comme pour l'étape 202, le mouvement oscillatoire est induit par le dispositif d'oscillation 120 lorsque la source 1 est conforme au premier mode de réalisation, ou par le dispositif de balayage 130 lorsque la source 1 est conforme au deuxième mode de réalisation. Le deuxième sens de rotation est opposé au premier sens de rotation. Ce changement de sens de parcours de boucle est typiquement obtenu en jouant sur les paramètres d'oscillation utilisés pour faire osciller le faisceau.

Sur la figure 5, le sens retour va de la droite vers la gauche, et le deuxième sens de rotation de la tache sur les deuxièmes boucles est un sens de rotation horaire. Il en découle que les bases respectives des deuxièmes boucles sont en dessous des sommets de ces mêmes deuxièmes boucles, comme c'était déjà le cas pour les premières boucles discutées précédemment. En conséquence l'énergie transportée par le faisceau d'énergie sur la couche 150 de poudre est répartie de manière plus homogène sur l'ensemble constitué de la première zone et de la deuxième zone.

De préférence, au moins une deuxième boucle s'étend sur une hauteur, mesurée dans la direction transversale de balayage, comprise entre 100 micromètres et 2 millimètres. Cette hauteur correspond à l'amplitude de la composante transversale du mouvement oscillatoire.

Par ailleurs, il est préférable que la source 1 fasse osciller la tache dans la direction transversale de balayage et dans la deuxième zone à une fréquence d'au moins 1 kHz. Cette fréquence est typiquement comprise entre 1 kHz et 10 kHz lorsque le faisceau d'énergie est un faisceau laser, ou comprise entre 1 kHz et 100 kHz lorsque le faisceau d'énergie est un faisceau d'électrons.

Toutes les deuxièmes boucles sont de préférence de même dimension (de même hauteur entre leur base et leur sommet, mesurée dans la direction transversale de balayage, et/ou de même largeur, mesurée dans la direction longitudinale de balayage).

Au moins deux des deuxièmes boucles s'entrecroisent. De préférence, toutes les deuxièmes boucles s'entrecroisent deux à deux.

De préférence, la succession de deuxièmes boucles est à distance de la succession de premières boucles (comme représenté sur la figure 5). En variante, au moins une deuxième boucle entrecroise une première boucle.

Les étapes qui précèdent, notamment les étapes 202 et 204, sont répétées en alternance. De manière à couvrir un plus grand nombre de zones adjacentes les unes aux autres dans la direction transversale de balayage (quatre zones étant représentées sur la figure 5).

## Revendications

1. Procédé de fabrication additive d'un objet à partir d'une couche de poudre, comprenant des étapes de:
• projection (200) d'un faisceau d'énergie sur une surface de la couche de poudre en une tache de sorte à fusionner la poudre,
• balayage (202), par le faisceau d'énergie, d'une première zone de la surface dans une direction longitudinale de balayage et selon un sens aller, et, au cours du balayage de la première zone, orientation du faisceau d'énergie de sorte que la tache parcourt la première zone selon une trajectoire comprenant des premières boucles décalées les unes par rapport aux autres dans la direction longitudinale de balayage, la tache parcourant chaque première boucle dans un premier sens de rotation,
• balayage (204) par le faisceau d'énergie d'une deuxième zone de la surface dans la direction longitudinale de balayage et selon un sens retour opposé au sens aller, la deuxième zone étant adjacente à la première zone dans une direction transversale de balayage perpendiculaire à la direction longitudinale de balayage, et au cours du balayage de la deuxième zone, orientation du faisceau d'énergie de sorte que la tache parcourt la deuxième zone selon une trajectoire comprenant des deuxièmes boucles décalées les unes par rapport aux autres dans la direction longitudinale de balayage, la tache parcourant chaque deuxième boucle dans un deuxième sens de rotation opposé au premier sens de rotation.

2. Procédé selon l'une des revendications précédentes, dans lequel au moins deux des premières boucles et/ou au moins deux des deuxièmes boucles s'entrecroisent.

3. Procédé selon l'une des revendications précédentes, dans lequel au moins deux des premières boucles et/ou au moins deux des deuxièmes boucles sont de même dimension.

4. Procédé selon l'une des revendications précédentes, dans lequel la succession de deuxièmes boucles est à distance de la succession de premières boucles dans la direction transversale de balayage.

5. Procédé selon l'une des revendications précédentes, dans lequel au moins une des boucles s'étend sur une amplitude mesurée dans la direction transversale de balayage comprise entre 100 micromètres et 2 millimètres.

6. Procédé selon l'une des revendications précédentes, dans lequel le faisceau d'énergie oscille dans la direction transversale de balayage a une fréquence d'au moins 1 kHz.

7. Procédé selon l'une des revendications précédentes, dans lequel le faisceau d'énergie est un faisceau laser ou un faisceau d'électrons.

8. Dispositif de fabrication additive d'un objet à partir d'une couche de poudre, le dispositif comprenant une source d'énergie configurée pour projeter un faisceau d'énergie sur une surface de la couche de poudre en une tache de sorte à fusionner la poudre, la source d'énergie comprenant une unité de commande configurée pour :
• commander un balayage, par le faisceau d'énergie, d'une première zone de la surface dans une direction longitudinale de balayage et selon un sens aller, et, au cours du balayage de la première zone, orienter le faisceau d'énergie de sorte que la tache parcourt la première zone selon une trajectoire comprenant des premières boucles décalées les unes par rapport aux autres dans la direction longitudinale de balayage, la tache parcourant chaque première boucle dans un premier sens de rotation,
• commander un balayage par le faisceau d'énergie d'une deuxième zone de la surface dans la direction longitudinale de balayage et selon un sens retour opposé au sens aller, la deuxième zone étant adjacente à la première zone dans une direction transversale de balayage perpendiculaire à la direction longitudinale de balayage, et, au cours du balayage de la deuxième zone, orienter le faisceau d'énergie de sorte que la tache parcourt la deuxième zone selon une trajectoire comprenant des deuxièmes boucles décalées les unes par rapport aux autres dans la direction longitudinale de balayage, le faisceau d'énergie parcourant chaque deuxième boucle dans un deuxième sens de rotation opposé au premier sens de rotation.

## Patentansprüche

1. Verfahren zum additiven Fertigen eines Objekts aus einer Pulverschicht, umfassend die Schritte zum:
• Richten (200) eines Energiestrahls auf eine Oberfläche der Pulverschicht an einem Punkt, um das Pulver zu schmelzen,
• Abtasten (202), durch den Energiestrahl, einer ersten Zone der Oberfläche in einer Längsabtastrichtung und gemäß einer Vorwärtsrichtung, und während des Abtastens der ersten Zone, Ausrichten des Energiestrahls, sodass der Punkt durch die erste Zone entlang einer Bahn verläuft, umfassend erste Schleifen, die in der Längsabtastrichtung zueinander versetzt sind, wobei der Punkt durch jede erste Schleife in einer ersten Drehrichtung verläuft,
• Abtasten (204), durch den Energiestrahl, einer zweiten Zone der Oberfläche in der Längsabtastrichtung und gemäß einer Rückwärtsrichtung, die der Vorwärtsrichtung entgegengesetzt ist, wobei die zweite Zone in einer Querabtastrichtung senkrecht zu der Längsabtastrichtung an die erste Zone angrenzt, und während des Abtastens der zweiten Zone, Ausrichten des Energiestrahls, sodass der Punkt durch die zweite Zone entlang einer Bahn verläuft, umfassend zweite Schleifen, die in der Längsabtastrichtung zueinander versetzt sind, wobei der Punkt durch jede zweite Schleife in einer zweiten Drehrichtung verläuft, die der ersten Drehrichtung entgegengesetzt ist.

2. Verfahren nach einem der vorstehenden Ansprüche, wobei sich mindestens zwei der ersten Schleifen und/oder mindestens zwei der zweiten Schleifen kreuzen.

3. Verfahren nach einem der vorstehenden Ansprüche, wobei mindestens zwei der ersten Schleifen und/oder mindestens zwei der zweiten Schleifen die gleiche Abmessung aufweisen.

4. Verfahren nach einem der vorstehenden Ansprüche, wobei die Abfolge der zweiten Schleifen in der Querabtastrichtung von der Abfolge erster Schleifen beabstandet ist.

5. Verfahren nach einem der vorstehenden Ansprüche, wobei sich mindestens eine der Schleifen über eine Amplitude, die in Querabtastrichtung gemessen wird, zwischen 100 Mikrometern und 2 Millimetern erstreckt.

6. Verfahren nach einem der vorstehenden Ansprüche, wobei der Energiestrahl in der Querabtastrichtung mit einer Frequenz von mindestens 1 kHz oszilliert.

7. Verfahren nach einem der vorstehenden Ansprüche, wobei der Energiestrahl ein Laserstrahl oder ein Elektronenstrahl ist.

8. Vorrichtung zum additiven Fertigen eines Objekts aus einer Pulverschicht, die Vorrichtung umfassend eine Energiequelle, die zum Richten eines Energiestrahls auf eine Oberfläche der Pulverschicht an einem Punkt konfiguriert ist, um das Pulver zu schmelzen, die Energiequelle umfassend eine Steuereinheit, die konfiguriert ist zum:
• Steuern eines Abtastens, durch den Energiestrahl, einer ersten Zone der Oberfläche in einer Längsabtastrichtung und in einer Vorwärtsrichtung, und während des Abtastens der ersten Zone, Ausrichten des Energiestrahls, sodass der Punkt durch die erste Zone entlang einer Bahn verläuft, umfassend erste Schleifen, die in der Längsabtastrichtung zueinander versetzt sind, wobei der Punkt durch jede erste Schleife in einer ersten Drehrichtung verläuft,
• Befehlen eines Abtastens, durch den Energiestrahl, einer zweiten Zone der Oberfläche in der Längsabtastrichtung und in einer Rückwärtsrichtung, die der Vorwärtsrichtung entgegengesetzt ist, wobei die zweite Zone in einer Querabtastrichtung senkrecht zu der Längsabtastrichtung an die erste Zone angrenzt, und während des Abtastens der zweiten Zone, Ausrichten des Energiestrahls, sodass der Punkt durch die zweite Zone entlang einer Bahn verläuft, umfassend zweite Schleifen, die in der Längsabtastrichtung zueinander versetzt sind, wobei der Punkt durch jede zweite Schleife in einer zweiten Drehrichtung verläuft, die der ersten Drehrichtung entgegengesetzt ist.

## Claims

1. Method for additively manufacturing an object from a powder layer, the method comprising the steps of:
• projecting (200) an energy beam onto a surface of the powder layer as a spot so as to fuse the powder,
• scanning (202), by the energy beam, a first zone of the surface in a longitudinal scanning direction and in a forward direction, and, during scanning of the first zone, directing the energy beam so that the spot traverses the first zone along a trajectory comprising first loops offset with respect to one another in the longitudinal scanning direction, the spot traversing each first loop in a first direction of rotation,
• scanning (204), by the energy beam, a second zone of the surface in the longitudinal scanning direction and in a return direction opposite to the forward direction, the second zone being adjacent to the first zone in a transverse scanning direction perpendicular to the longitudinal scanning direction, and during scanning of the second zone, directing the energy beam so that the spot traverses the second zone along a trajectory comprising second loops offset with respect to one another in the longitudinal scanning direction, the spot traversing each second loop in a second direction of rotation opposite to the first direction of rotation.

2. Method according to any of the preceding claims, wherein at least two of the first loops and/or at least two of the second loops intersect.

3. Method according to either of the preceding claims, wherein at least two of the first loops and/or at least two of the second loops are of the same size.

4. Method according to any of the preceding claims, wherein the succession of second loops is at a distance from the succession of first loops in the transverse scanning direction.

5. Method according to any of the preceding claims, wherein at least one of the loops extends over an amplitude measured in the transverse scanning direction of between 100 micrometers and 2 millimeters.

6. Method according to any of the preceding claims, wherein the energy beam oscillates in the transverse scanning direction at a frequency of at least 1 kHz.

7. Method according to any of the preceding claims, wherein the energy beam is a laser beam or an electron beam.

8. Device for additively manufacturing an object from a powder layer, the device comprising an energy source configured to project a beam of energy onto a surface of the powder layer as a spot so as to fuse the powder, the energy source comprising a control unit configured to:
• control a scan, by the energy beam, of a first zone of the surface in a longitudinal scanning direction and in a forward direction, and, during the scan of the first zone, direct the energy beam so that the spot traverses the first zone along a trajectory comprising first loops offset with respect to one another in the longitudinal scanning direction, the spot traversing each first loop in a first direction of rotation,
• control a scan, by the energy beam, of a second zone of the surface in the longitudinal scanning direction and in a return direction opposite to the forward direction, the second zone being adjacent to the first zone in a transverse scanning direction perpendicular to the longitudinal scanning direction, and, during scanning of the second zone, direct the energy beam so that the spot traverses the second zone along a trajectory comprising second loops offset with respect to one another in the longitudinal scanning direction, the energy beam traversing each second loop in a second direction of rotation opposite to the first direction of rotation.
